# EUROPÄISCHE PATENTSCHRIFT

(11) **EP 3 956 550 B1**
(45) Veröffentlichungstag und Bekanntmachung des Hinweises auf die Patenterteilung: **18.02.2026**
(21) Anmeldenummer: 20719385.5
(22) Anmeldetag: 09.04.2020
(51) Int. Cl.: F01N 3/20, F01N 13/08

(54) **ABGASBEHANDLUNGSEINRICHTUNG UND FAHRZEUG**
EXHAUST GAS TREATMENT DEVICE AND VEHICLE
DISPOSITIF DE TRAITEMENT DE GAZ D'ÉCHAPPEMENT ET VÉHICULE

(30) Priorität: 18.04.2019 DE 102019110359
(43) Veröffentlichungstag der Anmeldung: 23.02.2022
(73) Patentinhaber: Faurecia Emissions Control Technologies, Germany GmbH, 86154 Augsburg (DE)
(72) Erfinder: SAURAT, David, 86154 Augsburg (DE); BASSO, Christophe, 86154 Augsburg (DE); DECROUY, Bastien, 86154 Augsburg (DE); PETITJEAN, Sébastien, 86154 Augsburg (DE)
(74) Vertreter: Prinz & Partner mbB
(86) Internationale Anmeldenummer: PCT/EP2020/060282
(87) Internationale Veröffentlichungsnummer: WO 2020/212273

(56) Entgegenhaltungen:
- DE-A1- 102005 011 657
- DE-A1- 102013 217 009
- DE-A1- 102018 107 825
- US-A- 5 672 324
- US-A- 5 744 104

## Beschreibung

Die Erfindung betrifft eine Abgasbehandlungseinrichtung für ein Kraftfahrzeug, mit einem Gehäuse, das einen Abgaskanal begrenzt, durch den das Abgas strömt, einer separaten, elektrischen Heizvorrichtung, die sich durch den Abgaskanal erstreckt und von Abgas durchströmt ist, die dazu ausgebildet ist, das Abgas getrennt von einer zur Heizvorrichtung separaten Abgasreinigungseinrichtung nur zu erwärmen, und die keine Reinigungsfunktion übernimmt und die eine Heizkomponente und eine Trägerstruktur umfasst, wobei die Heizkomponente an der Trägerstruktur angebracht ist, und einer ersten und einer zweiten Elektrode, die an der Heizvorrichtung angebracht sind und die Heizvorrichtung elektrisch kontaktieren. Ferner betrifft die Erfindung ein Fahrzeug mit einer Abgasbehandlungseinrichtung.

Um die Schadstoffemission von Kraftfahrzeug-Verbrennungsmotoren zu begrenzen, ist es bekannt, Abgasreinigungseinrichtungen, wie beispielsweise Katalysatoren, Partikelfilter oder dergleichen, zur Abgasreinigung einzusetzen.

Um eine katalytisch unterstützte Umwandlung der Schadstoffe zu gewährleisten, muss das Abgas oder die Abgasreinigungseinrichtung eine vorgegebene Mindesttemperatur aufweisen. Insbesondere nach einem Kaltstart oder Neustart des Verbrennungsmotors ist eine solche Mindesttemperatur oft noch nicht erreicht.

Gemäß einer Variante werden in Abgasbehandlungseinrichtungen die Abgasreinigungseinrichtungen selbst elektrisch geheizt, um die vorgegebene Mindesttemperatur zu erreichen oder aufrecht zu erhalten. Diese Abgasbehandlungseinrichtungen betrifft die vorliegende Erfindung nicht.

Alternativ, und dies betrifft die vorliegende Erfindung, werden separate Heizvorrichtungen verwendet, die der Abgasreinigungseinrichtung zugeordnet, aber ihr strömungsmäßig vorgeschaltet sind. Bei diesen separaten Heizvorrichtungen übernehmen Elektroden die Stromversorgung und zusätzlich vorgesehene Befestigungsmittel die Befestigung.

Die US 5,744,104 A zeigt einen Hauptkonverter dem ein Heizkonverter in Form eines elektrisch kontaktierten, selbst elektrisch aufheizbaren Monoliths vorgeschaltet ist.

In der DE 10 2013 217 009 A1 wird ein beheizter Katalysator mit einem Monolith gezeigt, der in eine Mehrzahl von Segmenten unterteilt ist, und eine elektrische Heizung besitzt, durch die er beheizt wird. Der Monolith ist gewickelt, wodurch zwei separate Widerstandspfade gebildet sind, und wird durch eine auf Metall basierendes Innengehäuse gehaltert.

Die US 5,672,324 A zeigt ein Abgasrohr mit einem elektrischen Heizer, der stromaufwärts von einem Abscheidefilter angeordnet ist. Der Heizer besteht aus einer Zentralelektrode, einer Ringelektrode und einem mehrschichtigen Wärmeerzeuger in Form von flachen und gewellten Folienblättern, die miteinander verklebt sind.

Die DE 10 2018 107 825 A1 beschreibt einen Heizer, bei dem drei mit Isolierblechen gegeneinander isolierte Bleche aufgewickelt sind, wobei jedes der Bleche mit einer Elektrode in der Mitte und einer Elektrode in einem radial äußeren Randbereich kontaktiert wird.

In der DE 10 2005 011 657 A1 wird ein als Wärmeleiter ausgebildetes Verdampferrohr offenbart, das in einer Abgasleitung vor einem Katalysator angeordnet ist. Im Inneren des Verdampferrohrs kann Fluid strömen. Das Verdampferrohr kann elektrisch beheizt werden, um das darin fließende Fluid zu verdampfen.

Aufgabe der Erfindung ist es, eine einfache, zuverlässige und separate Heizvorrichtung für eine Abgasbehandlungseinrichtung bereitzustellen.

Die Aufgabe wird erfindungsgemäß dadurch gelöst, dass sich die erste Elektrode bis in einen Zentralbereich der Heizvorrichtung und sich die zweite Elektrode bis in einen Randbereich der Heizvorrichtung, gesehen in Abgasströmungsrichtung im Abgaskanal, erstreckt, wobei entweder die Trägerstruktur zumindest einen die Heizvorrichtung außenseitig umgebenden Tragrahmen hat, der über zumindest ein Befestigungselement gegenüber dem Gehäuse isoliert am Gehäuse angebracht ist und/oder über zumindest eine zweite Elektrode isoliert am Gehäuseangebracht ist, oder, die Heizkomponente direkt an der ersten Elektrode und der bzw. den zweiten Elektrode(n) und/oder an Befestigungselementen angebracht ist , wobei die Elektroden und die Befestigungselemente gegenüber dem Gehäuse isoliert sind.

Da sich die erste Elektrode bis in den Zentralbereich der Heizvorrichtung erstreckt und die Heizkomponente an der ersten Elektrode befestigt ist, kann ein Verformen der Heizvorrichtung verringert oder vermieden werden. Ferner kann durch die zentrale Stromeinleitung oder -ausleitung die Aufheizung der Heizvorrichtung über den Strömungsquerschnitt vereinheitlicht werden.

Dadurch, dass die Heizvorrichtung ein zur Abgasreinigungseinrichtung eigenständiges, separates Bauteil ist, das lediglich zur Erwärmung des Abgases dient und keine Reinigungsfunktion übernimmt und deshalb dem abgasreinigenden Körper vorgeschaltet ist, kann die Abgasbehandlungseinrichtung modular aufgebaut werden. Das vereinfacht die Montage oder Demontage. Zudem kann eine effizientere Erwärmung des Abgases gewährleistet werden, da kein Material der zugeordneten Abgasreinigungseinrichtung miterwärmt wird. Ferner kann die Heizvorrichtung räumlich getrennt beliebig stromaufwärts der Abgasreinigungsvorrichtung positioniert werden, da sie nicht in diese integriert ist.

Insbesondere stellen die beiden Elektroden mechanische Befestigungsmittel dar, über die die Heizvorrichtung am Gehäuse befestigt ist. Die beiden Elektroden übernehmen die Stromversorgung und zusätzlich die Befestigung der Heizvorrichtung. In anderen Worten sind die Elektroden Teil der Trägerstruktur. Das Gehäuse stellt ein gemeinsames Gehäuse für eine Abgasreinigungseinrichtung und für die Heizvorrichtung dar.

Optional können die Heizvorrichtung und die Abgasreinigungseinrichtung jeweils ein separates Gehäuse aufweisen.

Insbesondere ist die Heizvorrichtung in Abgasströmungsrichtung stromauf der Abgasreinigungseinrichtung angeordnet.

Der Tragrahmen dient zur umfangsmäßigen Stabilisierung der Heizkomponente.

Dabei kann der Tragrahmen im Bereich einer Verbindungsstelle zwischen der zweiten Elektrode und der Heizkomponente, insbesondere im Randbereich, eine Aussparung aufweisen.

Optional kann der Tragrahmen umfangsmäßig geschlossen sein.

Insbesondere kann der Tragrahmen aus einem elektrisch leitenden oder einem elektrisch isolierenden Material sein und einen Teil der zweiten Elektrode bilden.

Ein elektrisch leitender Tragrahmen hat den Vorteil, dass die Heizkomponente über eine größere Fläche kontaktiert werden kann. Das erhöht die Zuverlässigkeit der Kontaktierung und verbessert den Stromfluss in der Heizkomponente.

Durch zumindest ein Befestigungselement kann die Stabilität des Tragrahmen und somit der Heizvorrichtung erhöht werden. Wenn mehrere zweite Elektroden zur Befestigung verwendet werden, kann zusätzlich die Zuverlässigkeit der Kontaktierung erhöht und der Stromfluss in der Heizkomponente verbessert werden.

Bevorzugt ist der Randbereich ein umfangsmäßig geschlossener Rahmenbereich, dessen radiale Ausdehnung durch die radiale Erstreckung der zweiten Elektrode und/oder der Trägerstruktur definiert ist und/oder umschließt der Randbereich umfangsmäßig den Zentralbereich. Je nachdem wie weit sich die zweite Elektrode radial in Richtung des Zentralbereichs in die Heizvorrichtung erstreckt, ist die radiale Breite des Randbereichs größer oder kleiner. Dies hat direkten Einfluss auf die Ausdehnung des Zentralbereichs.

Insbesondere erfolgt der Stromfluss zwischen den beiden Elektroden in radialer Richtung, insbesondere vom Zentralbereich zum Randbereich oder umgekehrt. Es erfolgt demnach (im Wesentlichen) kein Stromfluss in axialer Richtung, gesehen in oder gegen die Abgasströmungsrichtung.

Eine Ausführungsform sieht vor, dass die beiden Elektroden heizvorrichtungsseitig nur mit der Heizkomponente gekoppelt sind und gehäuseseitig mit dem Gehäuse und/oder einer an einer Außenseite des Gehäuses angebrachten Befestigungshülse gekoppelt sind. Die Elektroden müssen zwangsläufig mit der Heizkomponente gekoppelt sein, um diese elektrisch kontaktieren zu können. Da sie heizvorrichtungsseitig nur mit der Heizkomponente gekoppelt sind und in diesem Bereich mit keinem weiteren Bauteil in Berührung kommen, das nicht elektrisch kontaktiert werden soll, entfällt das Herstellen einer aufwändig isolierten Verbindungsstelle. Durch die gehäuseseitige Anbringung sind die Elektroden leicht zugänglich. Zudem ist die gehäuseseitige Anbringung leicht umsetzbar.

Ein weiterer Aspekt sieht vor, dass sich die erste Elektrode und/oder die zweite Elektrode und/oder das Befestigungselement in Richtung der Heizvorrichtung durch das Gehäuse erstreckt bzw. erstrecken und jeweils in einer am Gehäuse angebrachten Befestigungshülse aufgenommen ist bzw. sind. Die Befestigungshülse dient zum Schutz der Durchgangsöffnung sowie der Elektroden und/oder des Befestigungselements vor Schmutz, Nässe oder dergleichen. Zudem sichert die Befestigungshülse die Dichtheit der Abgasbehandlungseinrichtung.

Bevorzugt ist bzw. sind die erste Elektrode und/oder die zweite Elektrode und/oder das Befestigungselement jeweils im Bereich des Gehäuses und/oder der Befestigungshülse isoliert, insbesondere durch eine Glas- und/oder Keramikisolierung.

In einer weiteren Ausführungsform ist der Tragrahmen elektrisch leitend und bildet dadurch einen Teil der ersten Elektrode und/oder der zweiten Elektrode. So wird der Bereich, in dem die Heizkomponente mit Strom versorgt wird, deutlich erhöht, wodurch die Zuverlässigkeit der Kontaktierung erhöht und der Stromfluss in der Heizkomponente verbessert werden kann.

Gemäß einem weiteren Aspekt ist die Heizkomponente ein eigensteifes Heizgitter, das im Zentralbereich von der ersten Elektrode kontaktiert ist und im Randbereich mit der zweiten Elektrode gekoppelt ist. Ein derartiges Heizgitter ist einfach in der Herstellung, da es beispielsweise aus einem Metallblech elektrolytisch herausgearbeitet oder ausgestanzt werden kann. Je nach Größe der Öffnungen können der durch die Heizvorrichtung verursachte Abgasströmungswiderstand sowie die Heizintensität beeinflusst werden. Auch kann ein derartiges Heizgitter leicht in die Heizvorrichtung oder die Abgasbehandlungseinrichtung montiert werden.

Insbesondere ist das Heizgitter, bevorzugt im Randbereich, außenseitig am Tragrahmen gehaltert. Dadurch kann die Stabilität des Heizgitters erhöht werden.

Der Tragrahmen kann elektrisch leitendes Material umfassen und von den Elektroden kontaktiert werden. So kann der Tragrahmen einen Teil der Elektroden bilden, was den der Heizkomponente zur Verfügung stehenden Kontaktierungsbereich vergrößert. Damit kann die Zuverlässigkeit der Kontaktierung erhöht und der Stromfluss in der Heizkomponente verbessert werden.

Ein weiterer Aspekt sieht vor, dass zwischen der Heizvorrichtung und dem Gehäuse ein Spalt ist, der optional durch ein Isolationsmaterial gefüllt ist. Der Spalt dient dazu, Wechselwirkungen zwischen der Heizvorrichtung und dem Gehäuse zu verringern oder zu verhindern und Fertigungsungenauigkeiten zu kompensieren. Mit Verwendung eines Isolationsmaterials kann eine Wechselwirkung zuverlässig unterbunden werden.

Ferner wird die Aufgabe durch ein Fahrzeug mit einem Verbrennungsmotor und einer Abgasbehandlungseinrichtung gelöst.

Die beschriebenen Vorteile und Eigenschaften der erfindungsgemäßen Abgasbehandlungseinrichtung gelten gleichermaßen für das Fahrzeug und umgekehrt.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 einen schematischen Längsschnitt einer erfindungsgemäßen Abgasbehandlungseinrichtung,
- Figur 2 einen weiteren schematischen Längsschnitt der erfindungsgemäßen Abgasbehandlungseinrichtung,
- Figur 3 eine Draufsicht auf eine erste Ausführungsform einer erfindungsgemäßen Heizvorrichtung der erfindungsgemäßen Abgasbehandlungseinrichtung gemäß Figur 1 oder Figur 2,
- Figur 4 eine Draufsicht auf eine zweite Ausführungsform der erfindungsgemäßen Heizvorrichtung der erfindungsgemäßen Abgasbehandlungseinrichtung gemäß Figur 1 oder Figur 2,
- Figur 5 eine Schnittansicht der erfindungsgemäßen Heizvorrichtung gemäß Figur 3 oder Figur 4, mit einer ersten Ausführungsform eines Anschlusses einer Heizkomponente an ein Gehäuse,
- Figur 6 eine Schnittansicht der erfindungsgemäßen Heizvorrichtung gemäß Figur 3 oder Figur 4, mit einer zweiten Ausführungsform des Anschlusses der Heizkomponente an das Gehäuse,
- Figur 7 eine Schnittansicht der erfindungsgemäßen Heizvorrichtung gemäß Figur 3 oder Figur 4, mit einer dritten Ausführungsform des Anschlusses der Heizkomponente an das Gehäuse,

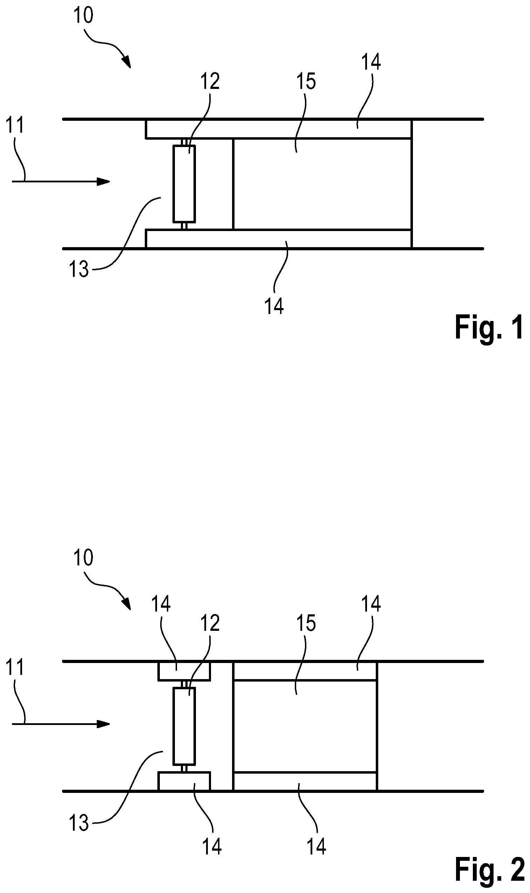

In Figur 1 und 2 sind zwei beispielhafte Ausführungsformen einer Abgasbehandlungseinrichtung 10 schematisch in einem Längsschnitt dargestellt. Die Abgasbehandlungseinrichtung 10 ist in einem Abgaskanal 13 vorgesehen und umfasst eine Heizvorrichtung 12 eine Abgasreinigungseinrichtung 15 und ein Gehäuse 14.

In beiden Ausführungsformen ist die Heizvorrichtung 12 in Abgasströmungsrichtung 11 beabstandet stromaufwärts der Abgasreinigungseinrichtung 15 angeordnet.

Die Heizvorrichtung 12 ist demnach ein zur Abgasreinigungseinrichtung 15 eigenständiges, separates Bauteil, das lediglich zur Erwärmung des Abgases dient und keine Reinigungsfunktion aufweist und nicht in diese integriert ist.

In Figur 1 ist das Gehäuse 14 ein gemeinsames Gehäuse 14, das der Heizvorrichtung 12 und der Abgasreinigungseinrichtung 15 zugeordnet ist.

In Figur 2 ist das Gehäuse 14 als ein separates Gehäuse 14 ausgebildet, das jeweils der Heizvorrichtung 12 und der Abgasreinigungseinrichtung 15 zugeordnet ist.

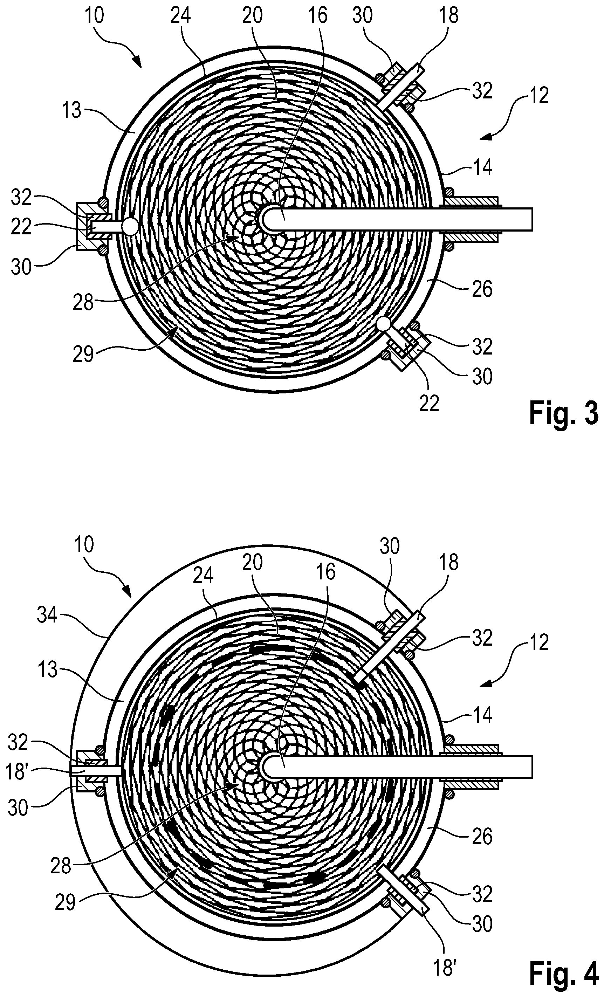

In Figur 3 ist die Abgasbehandlungseinrichtung 10 mit Blick in Abgasströmungsrichtung 11 im Querschnitt gezeigt. Die Abgasbehandlungseinrichtung 10 umfasst die Heizvorrichtung 12 und das Gehäuse 14.

Die Heizvorrichtung 12 setzt sich aus einer Heizkomponente 20 und einer Trägerstruktur zusammen, wobei die Trägerstruktur eine erste Elektrode 16, eine zweite Elektrode 18, zwei Befestigungselemente 22 und einen die Heizkomponente 20 außenseitig umgebenden Tragrahmen 24 aufweist.

Optional kann die Heizvorrichtung 12 auch mehrere oder wenigere zweite Elektroden 18 und/oder Befestigungselemente 22 aufweisen.

Die Heizkomponente 20 ist aus einem elektrischen leitenden Material gefertigt und in dieser Ausführungsform als ein eigensteifes Heizgitter ausgebildet.

Das Heizgitter kann zum Beispiel aus einem Metallblech gefertigt sein.

Über die Trägerstruktur ist die Heizvorrichtung 12 im Abgaskanal 13 angeordnet und so am Gehäuse 14 befestigt, dass zwischen dem Gehäuse 14 und der Heizvorrichtung 12 ein Spalt 26 vorhanden ist.

Der Spalt 26 reduziert oder verhindert Wechselwirkungen zwischen der Heizvorrichtung 12 und dem Gehäuse 14. Zudem können durch den Spalt 26 Fertigungsungenauigkeiten kompensiert werden.

Der Spalt 26 kann auch mit einem Füllmaterial, wie beispielsweise einer Isolierung, gefüllt sein.

Die erste Elektrode 16 erstreckt sich durch das Gehäuse 14 in einen Zentralbereich 28 der Heizvorrichtung 12 und ist in diesem Bereich mit der Heizkomponente 20 elektrisch und mechanisch verbunden.

Die Befestigung der ersten Elektrode 16 kann zum Beispiel über eine außenseitige Verschweißung am Gehäuse 14 erfolgen.

Der Tragrahmen 24 ist an einem Randbereich 29 der Heizkomponente 20 vorgesehen.

Die radiale Ausdehnung des Randbereichs 29 in Richtung des Zentralbereichs 28 wird durch die radiale Erstreckung der zweiten Elektrode 18 und/oder der Trägerstruktur bestimmt.

Die zweite Elektrode 18 und die Befestigungselemente 22 sind indirekt bzw. direkt mit dem Tragrahmen 24 verbunden und befestigen dadurch die Heizvorrichtung 12 im Gehäuse 14.

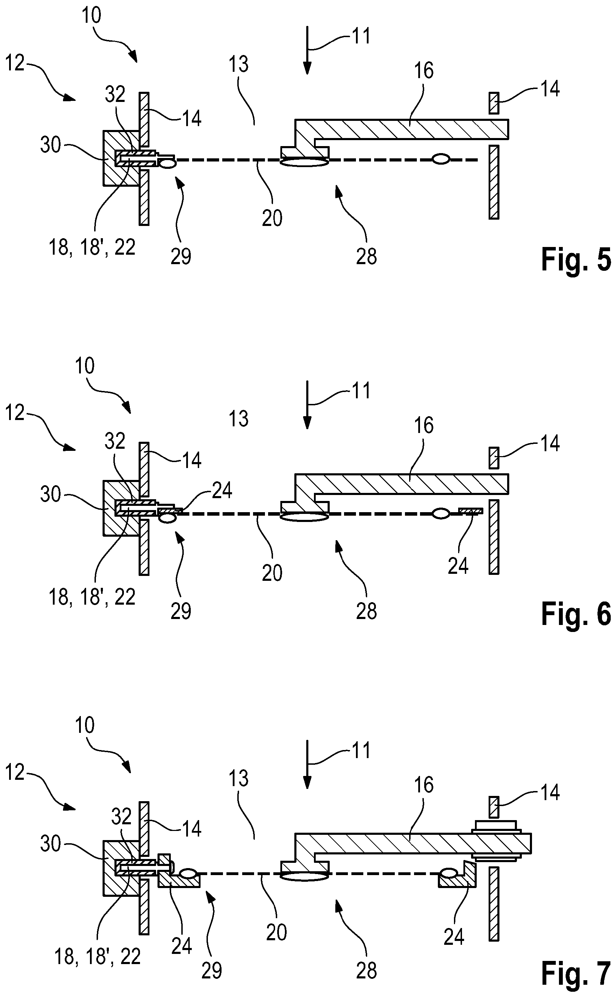

Auf den Tragrahmen 24 und dessen Verbindung mit der zweiten Elektrode 18 und den Befestigungselementen 22 wird weiter unten (Figuren 5-7) genauer eingegangen.

Die Heizkomponente 20 ist mit der zweiten Elektrode 18 elektrisch und mechanisch verbunden.

Die zweite Elektrode 18 sowie die Befestigungselemente 22 erstrecken sich durch das Gehäuse 14 und werden in einer an der Außenseite des Gehäuses 14 angebrachten Befestigungshülse 30 aufgenommen.

Die Befestigung der Befestigungshülsen 30 kann zum Beispiel über eine außenseitige Verschweißung am Gehäuse 14 erfolgen.

Das Gehäuse 14 und die Befestigungshülsen 30 sind von der zweiten Elektrode 18 und den Befestigungselementen 22 durch jeweils eine Isolierung 32 elektrisch oder galvanisch entkoppelt. Dadurch werden elektrische Wechselwirkungen zwischen der zweiten Elektrode 18 oder dem Befestigungselementen 22 und dem Gehäuse 14 oder der Befestigungshülse 30 vermieden.

Die Isolierung 32 der zweiten Elektrode 18 und die zweite Elektrode 18 erstrecken sich durch das Gehäuse 14 und die Befestigungshülse 30. Am außenseitigen Ende der zweiten Elektrode 18 können zum Beispiel Kabel oder Leitungen angeschlossen werden, die zur Herstellung eines Stromkreises benötigt werden.

Bei Stromfluss fließt Strom über die erste Elektrode 16 in den Zentralbereich 28 der Heizkomponente 20 und weiter (im Wesentlichen) in radialer und gemäß dem Verlauf der Heizkomponente auch teilweise in umfangmäßiger Richtung zum Randbereich 29 zur zweiten Elektrode 18.

Alternativ kann der Strom auch umgekehrt fließen.

Die Heizkomponente 20 erwärmt sich bei Stromfluss, wodurch auch das durch die Heizvorrichtung 12 strömende Abgas erwärmt wird.

Das erwärmte Abgas strömt danach in die Abgasreinigungseinrichtung 15 und erwärmt diese dabei. Dadurch kann die Effizienz der Abgasreinigung deutlich gesteigert werden.

Figur 4 zeigt eine zweite Ausführungsform der Heizvorrichtung 12, die der zuvor beschriebenen ersten Ausführungsform aus Figur 3 ähnlich ist. Dementsprechend werden ähnliche oder identische Bauteile mit denselben Bezugszeichen versehen und es wird insoweit auf die obigen Erläuterungen verwiesen.

Anstatt der Befestigungselemente 22 in der ersten Ausführungsform der Heizvorrichtung 12 sind in der zweiten Ausführungsform zwei weitere zweite Elektroden 18' vorgesehen. Der Aufbau und die Funktion der zusätzlichen zweiten Elektroden 18' sowie deren Anbringung am Gehäuse 14 sind nahezu identisch zu der der zweiten Elektrode 18.

Die zweiten Elektroden 18, 18' sind über ein Verbindungskabel 34 miteinander verbunden.

In dieser Ausführungsform ist die zweite Elektrode 18 verlängert und ragt weiter in Richtung des Zentralbereichs 28 der Heizvorrichtung 12. Dementsprechend ist die radiale Ausdehnung des Randbereichs 29 größer und folglich des Zentralbereichs 28 kleiner als in der ersten Ausführungsform gemäß Figur 3.

Aufgrund der verlängerten zweiten Elektrode 18 und der zwei weiteren zweiten Elektroden 18' kann zum einen die Verformungsbelastung der Heizvorrichtung 12 verringert und zum anderen die Kontaktierungsfläche vergrößert werden, was die Zuverlässigkeit der Kontaktierung erhöht und den Stromfluss in der Heizkomponente verbessert.

In den Figuren 5, 6 und 7 ist die Abgasbehandlungseinrichtung 10 in einem Längsschnitt gezeigt. Der Fokus liegt hier auf den verschiedenen Verbindungsarten der zweiten Elektrode 18 oder der Befestigungselemente 22 mit dem Tragrahmen 24 oder der Heizkomponente 20.

In Figur 5 ist die Heizkomponente 20 direkt an der ersten Elektrode 16 und der bzw. den zweiten Elektrode(n) 18, 18' und/oder den Befestigungselementen 22 angebracht. Dies ist möglich, da die zweiten Elektroden 18, 18' und die Befestigungselemente 22 jeweils gegenüber dem Gehäuse 14 und der Befestigungshülse 30 isoliert sind.

Figur 6 zeigt eine andere Ausführungsform, in der zwischen der bzw. den zweiten Elektrode(n) 18, 18' und/oder den Befestigungselementen 22 und der Heizkomponente 20 der Tragrahmen 24 angeordnet ist.

Eine derartige Verbindung ist an den zweiten Elektroden 18, 18' nur dann möglich, wenn der Tragrahmen 24 elektrisch leitendes Material umfasst.

Auch in dieser Ausführungsform kann der Tragrahmen 24 umfangsmäßig geschlossen sein.

Es wäre natürlich denkbar, eine derartige Verbindung nur an den Befestigungselementen 22 vorzusehen und an den Elektroden 18, 18' eine Verbindung gemäß der Ausführungsform aus Figur 5 anzuwenden.

Dabei kann der Tragrahmen 24 nicht umfangsmäßig geschlossen sein, sondern müsste eine Aussparung im Bereich der zweiten Elektroden 18, 18' aufweisen.

In Figur 7 ist eine zur Figur 6 ähnliche Ausführungsform dargestellt.

Eine Verwendung einer derartigen Verbindung an den zweiten Elektroden 18, 18' kann zum einen durch einen elektrisch leitenden Tragrahmen 24 sichergestellt werden und zum anderen dadurch erreicht werden, dass sich die zweiten Elektroden 18, 18' durch den Tragrahmen 24, insbesondere durch den zu den zweiten Elektroden 18, 18' senkrecht verlaufenden Teil des Tragrahmens 24, erstrecken und direkt mit der Heizkomponente 20 verbunden werden.

In dieser Ausführungsform kann der Tragrahmen 24 umfangsmäßig geschlossen sein.

Auch hier wäre es natürlich denkbar, eine derartige Verbindung nur an den Befestigungselementen 22 vorzusehen und an den Elektroden 18, 18' eine Verbindung gemäß der Ausführungsform aus Figur 5 anzuwenden.

Natürlich sind auch andere Verbindungsarten sowie Kombinationen der oben erwähnten Verbindungsarten möglich.

## Patentansprüche

1. Abgasbehandlungseinrichtung für ein Kraftfahrzeug, mit
einem Gehäuse (14), das einen Abgaskanal (13) begrenzt, durch den das Abgas strömt,
einer separaten, elektrischen Heizvorrichtung (12), die sich durch den Abgaskanal (13) erstreckt und von Abgas durchströmt ist, die dazu ausgebildet ist, das Abgas beabstandet von einer separaten Abgasreinigungseinrichtung (15) nur zu erwärmen, und die keine Reinigungsfunktion übernimmt und die eine Heizkomponente (20) und eine Trägerstruktur umfasst, wobei die Heizkomponente (20) an der Trägerstruktur angebracht ist, und
einer ersten und einer zweiten Elektrode (16, 18), die an der Heizvorrichtung (12) angebracht sind und die Heizvorrichtung (12) elektrisch kontaktieren, wobei
sich die erste Elektrode (16) bis in einen Zentralbereich (28) der Heizvorrichtung (12) und sich die zweite Elektrode (18) bis in einen Randbereich (29) der Heizvorrichtung (12), gesehen in Abgasströmungsrichtung (11) im Abgaskanal (13), erstreckt,
**dadurch gekennzeichnet, dass** entweder die Trägerstruktur zumindest einen die Heizvorrichtung (12) außenseitig umgebenden Tragrahmen (24) hat, der über zumindest ein Befestigungselement (22) gegenüber dem Gehäuse (14) isoliert am Gehäuse (14) angebracht ist und/oder über zumindest eine zweite Elektrode (18') isoliert am Gehäuse (14) angebracht ist,
oder,
die Heizkomponente (20) direkt an der ersten Elektrode (16) und der bzw. den zweiten Elektrode(n) (18, 18') und/oder an Befestigungselementen (22) angebracht ist, wobei die Elektroden (16, 18, 18') und die Befestigungselemente gegenüber dem Gehäuse (14) isoliert sind.

2. Abgasbehandlungseinrichtung nach Anspruch 1, **dadurch gekennzeichnet, dass** der Randbereich (29) ein umfangsmäßig geschlossener Rahmenbereich ist, dessen radiale Ausdehnung durch die radiale Erstreckung der zweiten Elektrode (18) und/oder der Trägerstruktur definiert ist und/oder dass der Randbereich (29) den Zentralbereich (28) umfangsmäßig umschließt.

3. Abgasbehandlungseinrichtung nach einem der vorhergehenden Ansprüche, **dadurch gekennzeichnet, dass** der Stromfluss zwischen den beiden Elektroden (16, 18) in radialer Richtung erfolgt, vom Zentralbereich (28) zum Randbereich (29) oder umgekehrt.

4. Abgasbehandlungseinrichtung nach einem der vorhergehenden Ansprüche, **dadurch gekennzeichnet, dass** die beiden Elektroden (16, 18) heizvorrichtungsseitig nur mit der Heizkomponente (12) gekoppelt sind und gehäuseseitig mit dem Gehäuse (14) und/oder einer an einer Außenseite des Gehäuses (14) angebrachten Befestigungshülse (30) gekoppelt sind.

5. Abgasbehandlungseinrichtung nach einem der vorhergehenden Ansprüche, **dadurch gekennzeichnet, dass** sich die erste Elektrode (16) und/oder die zweite Elektrode (18) und/oder das Befestigungselement (22) in Richtung der Heizvorrichtung (12) durch das Gehäuse (14) erstreckt bzw. erstrecken und jeweils in einer am Gehäuse (14) angebrachten Befestigungshülse (30) aufgenommen ist bzw. sind.

6. Abgasbehandlungseinrichtung nach einem der vorhergehenden Ansprüche, **dadurch gekennzeichnet, dass** der Tragrahmen (24) elektrisch leitend ist und dadurch einen Teil der ersten Elektrode (16) und/oder der zweiten Elektrode (18) bildet.

7. Abgasbehandlungseinrichtung nach einem der vorhergehenden Ansprüche, **dadurch gekennzeichnet, dass** die Heizkomponente (20) ein eigensteifes Heizgitter ist, das im Zentralbereich (28) von der ersten Elektrode (16) kontaktiert ist und im Randbereich (29) mit der zweiten Elektrode (18) gekoppelt ist.

8. Abgasbehandlungseinrichtung nach einem der vorhergehenden Ansprüche, **dadurch gekennzeichnet, dass** das Heizgitter, insbesondere im Randbereich (29), außenseitig am Tragrahmen (24) gehaltert ist.

9. Abgasbehandlungseinrichtung nach einem der vorhergehenden Ansprüche, **dadurch gekennzeichnet, dass** zwischen der Heizvorrichtung (12) und dem Gehäuse (14) ein Spalt (26) ist, der insbesondere durch ein Isolationsmaterial gefüllt ist.

10. Abgasbehandlungseinrichtung nach einem der vorhergehenden Ansprüche, **dadurch gekennzeichnet, dass** stromabwärts der und in Strömungsrichtung beabstandet von der Heizvorrichtung (12) eine Abgasreinigungseinrichtung (15) vorgesehen ist.

11. Fahrzeug mit einem Verbrennungsmotor und einer Abgasbehandlungsvorrichtung nach einem der vorhergehenden Ansprüche.

## Claims

1. An exhaust gas treatment device for a motor vehicle, comprising
a housing (14) which defines an exhaust gas duct (13) through which the exhaust gas flows,
a separate electric heating device (12) which extends through the exhaust gas duct (13) and through which exhaust gas flows and which is configured to only heat the exhaust gas at a distance from a separate exhaust gas purification device (15), and which does not perform a purification function and which comprises a heating component (20) and a carrier structure, the heating component (20) being attached to the carrier structure, and
first and second electrodes (16, 18), which are attached to the heating device (12) and make electrical contact with the heating device (12), wherein
the first electrode (16) extends as far as into a central region (28) of the heating device (12), and the second electrode (18) extends as far as into an edge region (29) of the heating device (12), as viewed in the exhaust gas flow direction (11) in the exhaust gas duct (13),
**characterized in that**
either the carrier structure has at least one support frame (24) which surrounds the heating device (12) on the outside and which is attached to the housing (14) by means of at least one fastener (22) so as to be insulated from the housing (14) and/or is attached to the housing (14) by means of at least one second electrode (18') so as to be insulated,
or
the heating component (20) is directly attached to the first electrode (16) and the second electrode(s) (18, 18') and/or to fasteners (22), the electrodes (16, 18, 18') and the fasteners being insulated from the housing (14).

2. The exhaust gas treatment device according to claim 1, **characterized in that** the edge region (29) is a circumferentially closed frame region the radial extension of which is defined by the radial extent of at least one of the second electrode (18) and the carrier structure, and/or **in that** the edge region (29) circumferentially encloses the central region (28).

3. The exhaust gas treatment device according to either of the preceding claims, **characterized in that** the current flow between the two electrodes (16, 18) takes place in the radial direction, from the central region (28) to the edge region (29), or vice versa.

4. The exhaust gas treatment device according to any of the preceding claims, **characterized in that**, on the heating device side, the two electrodes (16, 18) are coupled only to the heating component (12) and, on the housing side, they are coupled to at least one of the housing (14) and a fastening sleeve (30) attached to an outside of the housing (14).

5. The exhaust gas treatment device according to any of the preceding claims, **characterized in that** at least one of the first electrode (16), the second electrode (18) and the fastener (22) extends through the housing (14) toward the heating device (12) and each is received in a fastening sleeve (30) attached to the housing (14).

6. The exhaust gas treatment device according to any of the preceding claims, **characterized in that** the support frame (24) is electrically conductive, thereby forming part of the first electrode (16) and/or the second electrode (18).

7. The exhaust gas treatment device according to any of the preceding claims, **characterized in that** the heating component (20) is an inherently stiff heating grid, which is contacted by the first electrode (16) in the central region (28) and is coupled to the second electrode (18) in the edge region (29).

8. The exhaust gas treatment device according to any of the preceding claims, **characterized in that** the heating grid, in particular in the edge region (29), is mounted on its outside to the support frame (24).

9. The exhaust gas treatment device according to any of the preceding claims, **characterized in that** between the heating device (12) and the housing (14) there is a gap (26) which in particular is filled by an insulating material.

10. The exhaust gas treatment device according to any of the preceding claims, **characterized in that** an exhaust gas purification device (15) is provided downstream of the heating device (12) and spaced apart therefrom in the flow direction.

11. A vehicle comprising an internal combustion engine and an exhaust gas treatment device according to any of the preceding claims.

## Revendications

1. Dispositif de traitement des gaz d'échappement pour un véhicule automobile, comprenant
un boîtier (14) qui délimite un canal d'échappement (13) à travers lequel s'écoulent les gaz d'échappement,
un dispositif de chauffage électrique séparé (12) qui s'étend à travers le canal d'échappement (13) et est traversé par les gaz d'échappement, qui est réalisé de manière à uniquement chauffer les gaz d'échappement à distance d'un dispositif de purification (15) des gaz d'échappement séparé, et qui n'assume aucune fonction de purification et comprend un composant chauffant (20) et une structure de support, le composant chauffant (20) étant fixé à la structure de support, et
une première et une deuxième électrode (16, 18) qui sont fixées au dispositif de chauffage (12) et qui sont en contact électrique avec le dispositif de chauffage (12), la première électrode (16) s'étendant jusqu'à une zone médiane (28) du dispositif de chauffage (12) et la deuxième électrode (18) s'étendant jusqu'à une zone de bord (29) du dispositif de chauffage (12), vu dans le sens d'écoulement (11) des gaz d'échappement dans le canal d'échappement (13),
**caractérisé en ce que**
soit la structure de support comporte au moins un cadre porteur (24) qui entoure le dispositif de chauffage (12) à l'extérieur et qui est fixé au boîtier (14) de manière isolée par rapport au boîtier (14) au moyen d'au moins un élément de fixation (22) et/ou qui est fixé de manière isolée au boîtier (14) au moyen d'au moins une deuxième électrode (18'),
ou
le composant chauffant (20) est fixé directement à la première électrode (16) et à la ou aux deuxième(s) électrode(s) (18, 18') et/ou sur des éléments de fixation (22), les électrodes (16, 18, 18') et les éléments de fixation étant isolés par rapport au boîtier (14).

2. Dispositif de traitement des gaz d'échappement selon la revendication 1, **caractérisé en ce que** la zone de bord (29) est une zone de cadre fermée de manière circonférentielle, dont l'extension radiale est définie par l'extension radiale de la deuxième électrode (18) et/ou de la structure de support, et/ou **en ce que** la zone de bord (29) entoure la zone médiane (28) de manière circonférentielle.

3. Dispositif de traitement des gaz d'échappement selon l'une des revendications précédentes, **caractérisé en ce que** le flux de courant entre les deux électrodes (16, 18) s'effectue dans le sens radial, de la zone médiane (28) vers la zone de bord (29) ou inversement.

4. Dispositif de traitement des gaz d'échappement selon l'une des revendications précédentes, **caractérisé en ce que** les deux électrodes (16, 18) sont couplées, du côté du dispositif de chauffage, uniquement au composant chauffant (12) et, du côté du boîtier, au boîtier (14) et/ou à une douille de fixation (30) fixée sur une face extérieure du boîtier (14).

5. Dispositif de traitement des gaz d'échappement selon l'une des revendications précédentes, **caractérisé en ce que** la première électrode (16) et/ou la deuxième électrode (18) et/ou l'élément de fixation (22) s'étend(ent) dans la direction du dispositif de chauffage (12) à travers le boîtier (14) et est/sont respectivement logée(s)/logé(s) dans une douille de fixation (30) fixée au boîtier (14).

6. Dispositif de traitement des gaz d'échappement selon l'une des revendications précédentes, **caractérisé en ce que** le cadre porteur (24) est électriquement conducteur et forme ainsi une partie de la première électrode (16) et/ou de la deuxième électrode (18).

7. Dispositif de traitement des gaz d'échappement selon l'une des revendications précédentes, **caractérisé en ce que** le composant chauffant (20) est une grille chauffante à stabilité propre qui est contactée par la première électrode (16) dans la zone médiane (28) et est couplée à la deuxième électrode (18) dans la zone de bord (29).

8. Dispositif de traitement des gaz d'échappement selon l'une des revendications précédentes, **caractérisé en ce que** la grille chauffante est maintenue à l'extérieur sur le cadre porteur (24), en particulier dans la zone de bord (29).

9. Dispositif de traitement des gaz d'échappement selon l'une des revendications précédentes, **caractérisé en ce qu'**une fente (26) notamment remplie d'un matériau isolant est présente entre le dispositif de chauffage (12) et le boîtier (14).

10. Dispositif de traitement des gaz d'échappement selon l'une des revendications précédentes, **caractérisé en ce qu'**un dispositif de purification (15) des gaz d'échappement est prévu, dans le sens d'écoulement, en aval du dispositif de chauffage (12) et à distance de celui-ci.

11. Véhicule équipé d'un moteur à combustion interne et d'un dispositif de traitement des gaz d'échappement selon l'une des revendications précédentes.
